# EUROPÄISCHE PATENTSCHRIFT

(11) **EP 3 878 324 B1**
(45) Veröffentlichungstag und Bekanntmachung des Hinweises auf die Patenterteilung: **23.11.2022**
(21) Anmeldenummer: 21170384.8
(22) Anmeldetag: 09.03.2017
(51) Int. Cl.: A47J 31/44, A47J 31/46

(54) **KAFFEEMASCHINE**
COFFEE MACHINE
CAFÉTIÈRE AUTOMATIQUE

(30) Priorität: 11.03.2016 CH 3212016
(43) Veröffentlichungstag der Anmeldung: 15.09.2021
(62) Teilanmeldung aus: 17708841.6
(73) Patentinhaber: Schaerer AG, 4528 Zuchwil (CH)
(72) Erfinder: Sinzig, Peter, 3302 Moosseedorf (CH); Aeberhard, Bruno, 4528 Zuchwil (CH); Lienhard, Andy, 4552 Derendingen (CH); Kissling, Franco, 4500 Solothurn (CH); Pinto da Costa, Miguel Alexandre, 4588 Oberamsern (CH)
(74) Vertreter: IPrime Rentsch Kaelin AG

(56) Entgegenhaltungen:
- EP-A1- 0 761 150
- EP-A1- 2 080 457
- EP-A1- 2 896 332
- WO-A1-2012/121598
- CH-A5- 682 798
- US-A1- 2014 123 860

## Beschreibung

### Gebiet der Technik

Die vorliegende Erfindung betrifft Kaffeemaschinen zum automatischen Zubereiten von Kaffeegetränk und gegebenenfalls weiterer Getränken.

### Technologischer Hintergrund

Bei Kaffeemaschinen der eingangs genannten Art ist es bekannt, einen Auslauf höhenverstellbar direkt aussen am Gehäuse vor oder unter der Frontblende platziert zu befestigen. Bei dieser Ausgestaltung ist der Verstellweg aber entweder durch die Frontblende selbst oder durch Bedienelemente auf der Frontblende begrenzt, so dass dieser Auslauf bisher nur einen Höhenunterschied zwischen einer Tasse und kleineren Kännchen oder Kannen ausgleichen konnte. Für die Befüllung von Glaskannen oder gar grossen Thermoskannen musste nach wie vor ein weiterer, höher positionierter Auslauf vorgesehen sein.

Die Druckschrift EP 1 199 016 A1 schlägt nun vor, durch eine höhenverstellbare Frontblende auf konstruktiv einfache Weise einen wesentlich grösseren Höhenverstellbereich für einen im Bereich der Frontblende angeordneten Auslauf zu realisieren und Funktionsteile wie z.B. Zuführschläuche hinter der Frontblende verschwinden zu lassen, ohne das Erscheinungsbild der Bedienfläche zu stören.

Eine solche höhenverstellbare Frontblende ist damit im Stand der Technik nur dafür vorgesehen, im Zusammenwirken mit der Auslasseinheit bzw. dem Auslauf einen grösseren Verstellbereich für diesen zu realisieren.

Es ist jedoch auch denkbar, die Höhenverstellbarkeit der Frontblende mit ihren Bedienungs- und Anzeigeelementen dazu zu benutzen, um Zugang zu im Normalbetrieb verdeckten Zugriffsmöglichkeiten zu erlauben. Insbesondere lässt sich auf diese Weise eine Zugriffsmöglichkeit zu Servicezwecken verwirklichen, die auf einfache Weise einem dazu autorisierten Personal vorbehalten werden kann.

CH 682798 A5 zeigt eine Kaffeemaschine, aufgebaut aus mehreren, in ein Gestell einschiebbaren Baugruppen, die hinter einer wegnehmbaren Bedienungsfront angeordnet und einzeln nach vorn oder nach oben aus dem Gestell entnehmbar sind. Als zentrale Baugruppe ist ein Kaffeebrühmodul mit zwei Brühstellen vorgesehen, auf welchen im Wesentlichen alle beheizten Aggregate zusammengefasst sind.

EP 0761150 A1 zeigt eine Kaffeemaschine mit einem Gehäuserahmen, in welchen wenigstens eine Extraktionsvorrichtung, eine elektronische Steuereinheit sowie eine Heisswasser-Versorgung als unabhängig voneinander ausgebildete Module einschiebbar angeordnet sind. Diese sind jeweils auf der Rückseite mit wenigstens einem Steckerteil versehen, welcher im eingeschobenen Zustand mit einem jeweils korrespondierenden Steckerteil im Gehäuserahmen gekoppelt ist, wobei diese Steckerteile im Gehäuserahmen über Kabel oder Leitungen in entsprechender Weise miteinander verbunden sind.

### Darstellung der Erfindung

Aufgabe der Erfindung ist es unter anderem, eine Kaffeemaschine der eingangs genannten Art zur Verfügung zu stellen, der die oben erwähnten und anderen Nachteile nicht aufweist. Insbesondere soll eine solche Kaffeemaschine der eingangs genannten Art eine vereinfachte Reinigung ermöglichen.

Diese und andere Aufgaben werden gelöst durch eine erfindungsgemässe Kaffeemaschine gemäss dem unabhängigen Anspruch. Weitere bevorzugte Ausführungsformen sind in den abhängigen Ansprüchen gegeben.

Ein Aspekt der Erfindung betrifft eine Kaffeemaschine zum automatischen Zubereiten eines Kaffeegetränks und gegebenenfalls weiterer Getränke, umfassend ein Gehäuse, in welchem die zur Zubereitung des Kaffeegetränks notwendigen technischen Mittel wie z.B. Mahlwerk, Brüheinrichtung, Boiler, untergebracht sind, eine an der Vorderseite des Gehäuses angeordnete Anzeige- und Bedieneinheit, über welche das gewünschte Kaffeegetränk eingegeben werden kann und an welcher Informationen über das jeweilige Kaffeegetränk und/oder den Betriebszustand der Maschine ausgegeben werden, eine unterhalb der Anzeige- und Bedieneinheit angeordnete Auslasseinheit, über welche das gewünschte Getränk, gegebenenfalls zusammen mit aromatisierenden oder anderen Zusätzen, ausgegeben wird, sowie auf der Oberseite des Gehäuses angeordnete Vorratsbehälter, in welchen Grundstoffe, insbesondere Kaffeebohnen, für die Zubereitung des Kaffeegetränks und gegebenenfalls weiterer Getränke, bereitgehalten werden. Das Gehäuse weist abnehmbare Seiten- und/oder Rückwände auf, welche am Gehäuse magnetisch gehalten werden.

Dadurch lässt sich bei der erfindungsgemässen Kaffeemaschine eine Servicefreundlichkeit erreichen. Hierdurch ist es möglich, die Seiten- und/oder Rückwände zu Servicezwecken schnell und auf einfache Weise ohne Werkzeug abzunehmen und später wieder anzubringen.

Die Anzeige- und Bedieneinheit kann zur Ermöglichung eines Zugangs zum Inneren der Maschine zwischen einer Normalposition und einer darüber liegenden Serviceposition in der Höhe verfahrbar ausgebildet sein.

Eine solche erfindungsgemässe Kaffeemaschine schafft demnach einen gezielten Zugang zu ansonsten verdeckten Eingriffsmöglichkeiten, was die Reinigung der Kaffeemaschine erleichtert.

Eine Ausgestaltung der erfindungsgemässen Kaffeemaschine ist dadurch gekennzeichnet, dass die Vorratsbehälter auf der Oberseite des Gehäuses abnehmbar aufgesetzt sind, dass die Vorratsbehälter im aufgesetzten Zustand verriegelbar sind, und dass hinter der Anzeige- und Bedieneinheit ein Betätigungsmechanismus angeordnet ist, mittels welchem die Vorratsbehälter im aufgesetzten Zustand verriegelbar und entriegelbar sind, und welcher für die Betätigung zugänglich ist, wenn die Anzeige- und Bedieneinheit sich in der Serviceposition befindet.

Wenn also die mit der Maschine fest verriegelten Vorratsbehälter zum Befüllen und/oder Reinigen von der Maschine abgenommen werden sollen, wird die Anzeige- und Bedieneinheit nach oben in die Serviceposition verfahren, so dass ein dahinter angeordneter Betätigungsmechanismus zugänglich wird, mit dessen Hilfe die Vorratsbehälter vorzugsweise gemeinsam und gleichzeitig entriegelt werden können.

Wenn die Vorratsbehälter jeweils eine Ausgabeöffnung aufweisen, welche mittels eines Schiebers geöffnet und verschlossen werden kann, ist es von Vorteil, dass der Betätigungsmechanismus mit dem Verriegeln der aufgesetzten Vorratsbehälter gleichzeitig den jeweiligen Schieber öffnet und mit dem Entriegeln schliesst.

Das Schliessen der Behälter vor dem Abnehmen hat den Vorteil, dass keine noch in den Behältern befindlichen Inhalte nach dem Abnehmen der Behälter unkontrolliert austreten können.

Der Betätigungsmechanismus kann insbesondere einen verschwenkbaren Betätigungshebel aufweisen, welcher zwischen einer Verriegelungsposition, in welcher die Vorratsbehälter verriegelt sind, und einer Entriegelungsposition, in welcher die Vorratsbehälter entriegelt sind, verschwenkbar ist.

Hierdurch wird eine besonders einfache und störungssichere mechanische Ver- und Entriegelung möglich.

Eine andere Ausgestaltung der erfindungsgemässen Kaffeemaschine ist dadurch gekennzeichnet, dass die Auslasseinheit in der Höhe verfahrbar ausgebildet ist und dass Mittel vorgesehen sind, welche ein gleichförmiges Verfahren der Auslasseinheit in der Höhe bewirken.

Derartige Mittel wirken dem Effekt entgegen, dass die Auslasseinheit aufgrund ihres Eigengewichtes leichter nach unten als nach oben verfahrbar ist, und erleichtern so die Bedienung der Maschine und die Einstellung einer gewählten Auslasshöhe.

Insbesondere kann dazu die Auslasseinheit mit dem freien Ende eines aufrollbaren Federbandes verbunden sein, welches aus einem aufgerollten Ruhezustand abgerollt wird, wenn die Auslasseinheit nach unten verfahren wird und sich wieder aufrollt, wenn die Auslasseinheit nach oben verfahren wird.

Eine solche Lösung für die Auslasseinheit ist nicht auf die vorliegende Kaffeemaschine beschränkt, sondern kann auch bei anderen Kaffeemaschinen mit Vorteil eingesetzt werden.

Eine wieder andere Ausgestaltung der erfindungsgemässen Kaffeemaschine ist dadurch gekennzeichnet, dass in der Auslasseinheit eine Auslassanordnung vorgesehen ist, in welcher nebeneinander eine Mehrzahl von rohrförmigen Auslässen aus einem elastomeren Material, insbesondere Silikonkautschuk oder Gummi, angeordnet sind, in welche Leitungen für die Getränke und/oder Getränkezusätze münden, und welche zum einfachen Reinigen in der Auslasseinheit herausnehmbar gelagert sind.

Bei einer solchen Kaffeemaschine ist es möglich, durch Flüssigkeitsreste gebildete stabile Krusten an den unteren Auslässen leicht zu entfernen, indem zum Reinigen die Auslässe verformt werden, so dass angesetzte Krusten abplatzen.

Die Auslässe schliessen dicht mit den Leitungen für die Heranführung der Getränke und/oder Getränkezusätze ab und bilden so Endstücke dieser Leitungen, an denen nach dem Einsatz möglicherweise Reste der Getränke und/oder Getränkezusätze haften bleiben und verkrusten können. Da die Auslässe aus elastomerem Material bestehen, lassen sie sich besonders leicht reinigen, wobei durch Verformung des Materials feste Krusten und Reste leicht abgesprengt werden können. Wenn die Auslässe aus der Auslasseinheit herausnehmbar sind, kann die Reinigung weiter vereinfacht und erleichtert werden.

So können die Auslässe insbesondere Teil einer zumindest teilweise aus einem elastomeren Material bestehenden, quer zur Auslassrichtung sich erstreckenden Auslassplatte sein.

Die Auslassplatte kann insbesondere ein Formteil sein, in welchem die Auslässe angeformt sind.

Insbesondere kann die Auslassplatte als eigenständiges Teil vollständig aus dem elastomeren Material bestehen und in der Auslasseinheit durch einen von unten aufsetzbaren und einrastbaren Halterahmen gehalten werden.

Es ist aber auch denkbar, dass die Auslassplatte als Verbundteil aus einem elastomeren Dichtungsteil und einem damit verbundenen formstabilen Rahmenteil aufgebaut ist und mittels des Rahmenteils in die Auslasseinheit einrastend einsetzbar ist.

Hierdurch kann das Herausnehmen zum Reinigen und Wiedereinsetzen weiter vereinfacht werden.

Es versteht sich von selbst, dass diese Art der Auslasseinheit auch bei anderen Kaffeemaschinen, insbesondere solchen, die mit sirupartigen Aromazusätzen arbeiten, mit Vorteil eingesetzt werden kann.

Eine weitere Ausgestaltung der erfindungsgemässen Kaffeemaschine ist dadurch gekennzeichnet, dass die Anzeige- und Bedieneinheit ein berührungsempfindliches Display zur Eingabe und Anzeige von Informationen umfasst, und dass ausserhalb, insbesondere unterhalb des Displays, eine elektronische Analoganzeige nach Art eines Zeigerinstruments angeordnet ist, welche den Brühdruck anzeigt.

Ein solches, einem mechanischen Manometer nachgebildetes elektronisches Manometer, bei dem Zeiger und Skala auf einem kreisrunden Display nachgebildet und dargestellt werden, gibt dem Benutzer der Kaffeemaschine den Eindruck und die Information, die er bei einer klassischen Espressomaschine hätte. Die Druckanzeige arbeitet mit einem elektronischen Drucksensor zusammen, der sich im Inneren der Maschine an geeigneter Stelle befindet.

Auch diese Art der "klassischen" Druckanzeige lässt sich ohne weiteres bei anderen Kaffeemaschinen einsetzen. Es ist auch denkbar, auf diese Weise eine analoge Temperaturanzeige zu realisieren und vorzusehen.

Eine andere Ausgestaltung der erfindungsgemässen Kaffeemaschine ist dadurch gekennzeichnet, dass links und rechts von der Auslasseinheit ein Heisswasserauslass und eine Dampflanze nach unten herausstehend angeordnet sind, und dass dem Heisswasserauslass und der Dampflanze auf der Anzeige- und Bedieneinheit jeweils zur Aktivierung ein entsprechender Heisswasserknopf und Dampfknopf zugeordnet sind.

Durch eine entsprechende räumliche Zuordnung der Auslässe für Heisswasser und Dampf und der zugehörigen Bedienknöpfe lässt sich eine intuitive Bedienbarkeit der Maschine erreichen, die ohne spezielle Menüführung oder Beschriftung auskommen kann.

Eine noch andere Ausgestaltung der erfindungsgemässen Kaffeemaschine ist dadurch gekennzeichnet, dass die Vorratsbehälter jeweils mit einem abschliessbaren Deckel ausgestattet sind, und dass wenigstens einer der Vorratsbehälter im Deckel einen Einwurfschlitz zum Einwerfen einer Reinigungstablette aufweist.

Durch die abschliessbaren Deckel wird verhindert, dass nicht autorisierte Personen Zugang zum Inneren der Behälter erlangen und beispielsweise die Vorratsbehälter falsch befüllen, verunreinigen oder dergleichen.

Eine weitere Ausgestaltung der erfindungsgemässen Kaffeemaschine ist dadurch gekennzeichnet, dass die Vorratsbehälter jeweils einen ausklappbaren Standbügel aufweisen, der einen sicheren Stand des abgenommenen und gegebenenfalls gefüllten Vorratsbehälters ermöglicht. Hierdurch wird sicher verhindert, dass die abgenommenen Vorratsbehälter zur Seite umkippen und unbeabsichtigt ihren Inhalt nach aussen entleeren.

### Kurze Beschreibung der Zeichnungen

Die Erfindung soll nachfolgend anhand von Ausführungsbeispielen im Zusammenhang mit den Zeichnungen näher erläutert werden. Die Zeichnungen zeigen lediglich Ausführungsbeispiele des Erfindungsgegenstands. Es zeigen:
- Figur 1: in einer Ansicht von vorne ein Ausführungsbeispiel einer Kaffeemaschine nach der Erfindung mit drei aufgesetzten Vorratsbehältern;
- Figur 2: in einer perspektivischen Ansicht die Kaffeemaschine aus Figur 1 mit einer abgenommenen Seitenwand;
- Figur 3a: in einer perspektivischen Ansicht einen der Vorratsbehälter mit einem im Deckel angebrachten Schlitzeinsatz und geöffnetem Schieber;
- Figur 3b: einen der Vorratsbehälter mit nach unten ausgeklapptem Standbügel;
- Figur 4: ein Ausführungsbeispiel einer (geöffneten) Auslasseinheit, in die eine elastomere Auslassplatte mit einer Mehrzahl von parallelen Auslässen einsetzbar ist;
- Figur 5: eine zu Figur 4 alternative Auslassplatte in Verbundform mit einem elastomeren Dichtungsteil und einem damit fest verbundenen Rahmenteil;
- Figur 6: Einzelheiten einer mit einem Federband arbeitenden Mechanik, die ein gleichmässiges Verfahren der Auslasseinheit bewirkt;
- Figur 7: in vergrösserter Darstellung ein Schlitzeinsatz für einen Vorratsbehälter;
- Figur 8: die bei abgenommener Bedien- und Anzeigeeinheit sichtbare Hebelmechanik für das Verriegeln und Entriegeln der Vorratsbehälter;
- Figur 9a: den Zugang zur Hebelmechanik bei hochgeschobener Bedien- und Anzeigeeinheit; und
- Figur 9b: die Parkposition der Hebelmechanik nach der Entriegelung.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

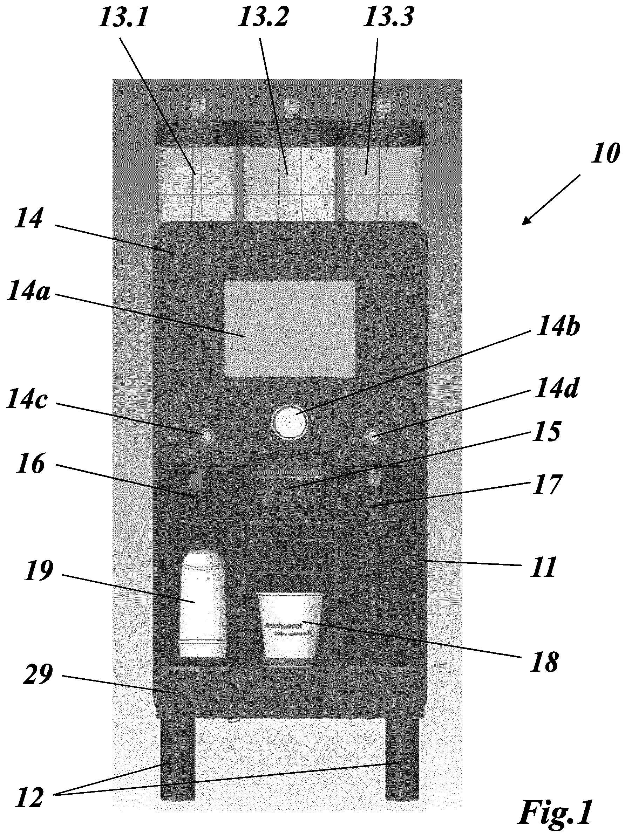

Figur 1 zeigt in einer Ansicht von vorne ein Ausführungsbeispiel einer Kaffeemaschine nach der Erfindung mit drei aufgesetzten Vorratsbehältern 13.1, 13.2 und 13.3. Die Kaffeemaschine 10 der Figur 1 weist ein Gehäuse 11 mit Füssen 12 auf, in welchem (in Figur 1 nicht sichtbar) die zur Zubereitung des Kaffeegetränks notwendigen technischen Mittel wie z.B. Mahlwerk, Brüheinrichtung, Boiler und gegebenenfalls auch interne Behälter mit Aromazusätzen, untergebracht sind.

An der Vorderseite des Gehäuses 11 ist eine rechteckige Anzeige- und Bedieneinheit 14 mit abgerundeten Ecken angeordnet, über welche das gewünschte Kaffeegetränk oder auch andere Getränke wie z.B. heisser Kakao, eingegeben werden können und an welcher Informationen über das jeweilige Kaffeegetränk (oder andere Getränk) und/oder den Betriebszustand der Maschine ausgegeben werden.

Die Anzeige- und Bedieneinheit 14 umfasst ein zentral angeordnetes, ebenfalls rechteckiges, berührungsempfindliches Display 14a zur Eingabe und Anzeige von Informationen innerhalb eines aufrufbaren Menüs. Unterhalb des Displays 14a ist mittig eine elektronische Analoganzeige 14b nach Art eines Zeigerinstruments angeordnet, die ein mechanisches Manometer mit Zeiger und Skala nachbildet und den in der Maschine elektronisch aufgenommenen Brühdruck anzeigt.

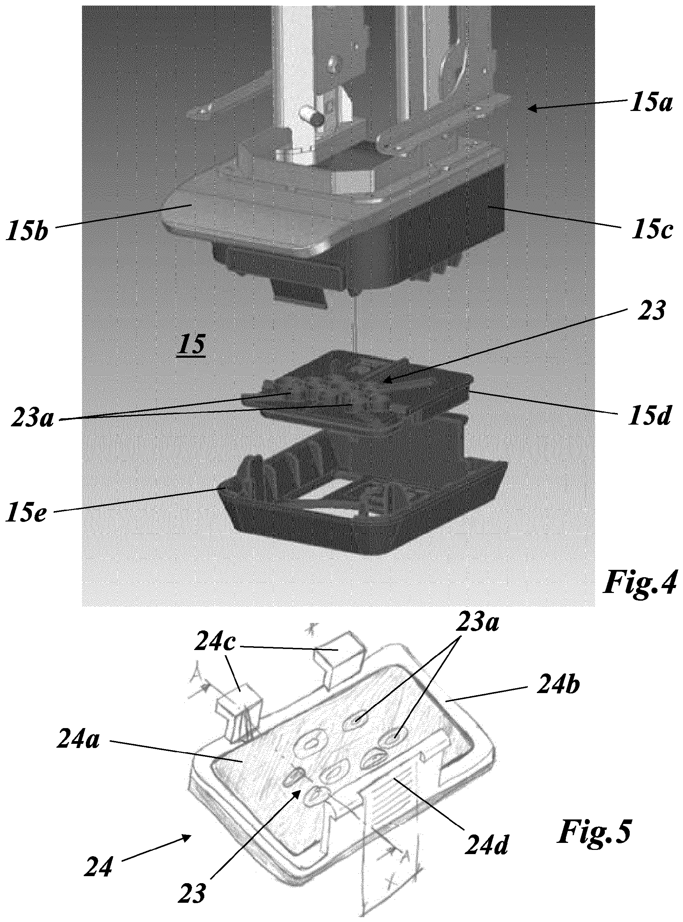

Unterhalb der Anzeige- und Bedieneinheit 14 ist eine Auslasseinheit 15 angeordnet, welche zur Bedienung eine Griffplatte (15b in Figur 4) aufweist und über welche das gewünschte Getränk, gegebenenfalls zusammen mit aromatisierenden oder anderen Zusätzen (z.B. Milch), ausgegeben wird. Die Auslasseinheit 15 hat einen speziellen inneren Aufbau und ist auf bestimmte Weise höhenverstellbar, was im weiteren Verlauf Im Zusammenhang mit den Figur 4, 5 und 6 noch näher beschrieben und erläutert wird.

Unterhalb der Auslasseinheit 15 ist eine Auffangschale 29 angeordnet, die mit einer Lochplatte oder einem Gitter abgedeckt ist, auf die ein Becher 18 oder dgl. zur Aufnahme des ausgegebenen Getränks gestellt werden kann. Weiterhin kann in dem räumlich zurückgesetzten Ausgabebereich der Maschine 10 eine von aussen einsetz- und austauschbare Kartusche 19 zur Wasserentkalkung vorgesehen sein.

Links und rechts von der Auslasseinheit 15 sind ein Heisswasserauslass 16 und eine Dampflanze 17 nach unten herausstehend und gerichtet angeordnet, die z.B. zur Teebereitung und zum Aufschäumen von Milch für die Zubereitung eines Cappuccinos oder dgl. vorgesehen sind. Dem Heisswasserauslass 16 und der Dampflanze 17 sind direkt darüber auf der Anzeige- und Bedieneinheit 14 jeweils zur Aktivierung ein entsprechender Heisswasserknopf 14c und Dampfknopf 14d zugeordnet. Durch diese direkte örtliche Zuordnung wird eine intuitive Bedienbarkeit der Maschine erleichtert.

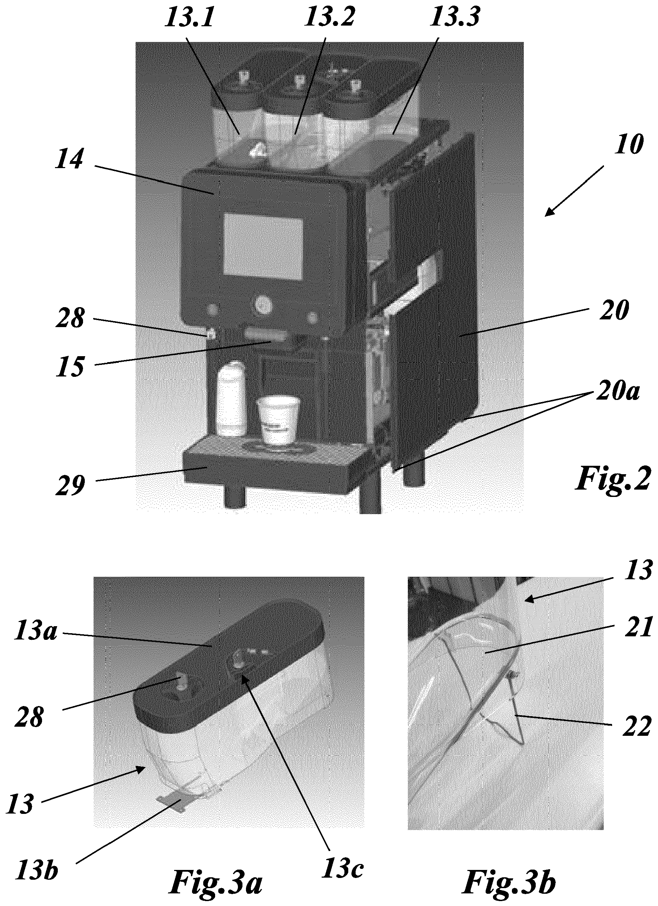

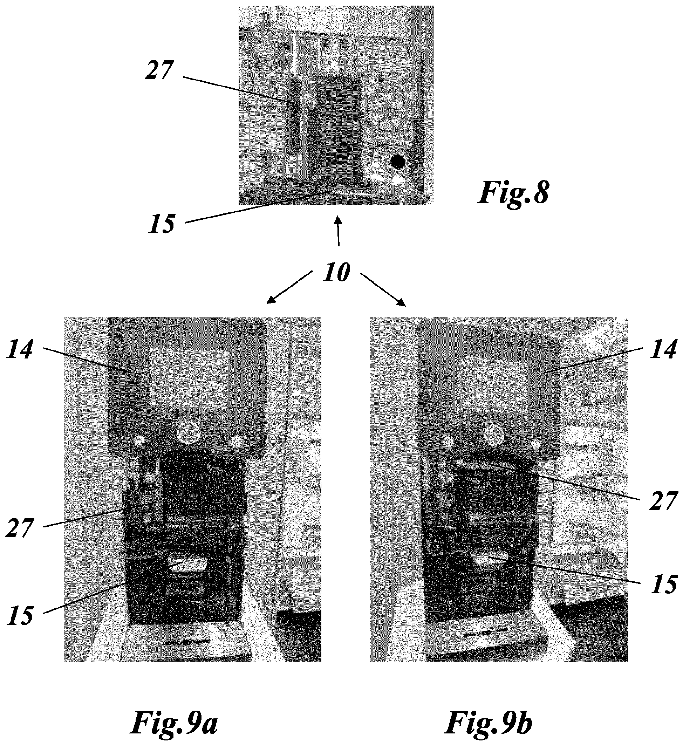

Wie den Figur 9a und 9b zu entnehmen ist, ist die Anzeige- und Bedieneinheit 14 zur Ermöglichung eines Zugangs zum Inneren der Maschine zwischen einer Normalposition (Figur 1, Figur 2) und einer darüber liegenden Serviceposition (Figur 9a, 9b) in der Höhe verfahrbar ausgebildet. Damit das Verfahren der Anzeige- und Bedieneinheit 14 nur autorisierten Personen möglich ist, ist die Anzeige- und Bedieneinheit 14 mit einem Schloss gesichert, dass mittels eines Schlüssels 28 betätigt werden kann (Figur 2).

Die auf der Oberseite des Gehäuses 11 angeordneten Vorratsbehälter 13.1, 13.2 und 13.3 enthalten für die Zubereitung des Kaffeegetränks und gegebenenfalls weiterer Getränke notwendigen Grundstoffe, insbesondere Kaffeebohnen. So kann beispielsweise der linke Vorratsbehälter 13.1 Kakaopulver für die Zubereitung eines Kakaogetränks enthalten, während die anderen Vorratsbehälter 13.2 und 13.3 verschieden Arten von Kaffeebohnen aufnehmen.

Die mittels entsprechender Schlüssel (28 in 3a) am Deckel verschliessbaren Vorratsbehälter 13 bzw. 13.1, 13.2 und 13.3 sind auf der Oberseite des Gehäuses 11 abnehmbar aufgesetzt und im aufgesetzten Zustand verriegelbar. Dazu ist hinter der Anzeige- und Bedieneinheit 14 ein Betätigungsmechanismus (27 in Figur 8 und 9a, 9b) angeordnet, mittels welchem die Vorratsbehälter 13 bzw. 13.1, 13.2 und 13.3 im aufgesetzten Zustand verriegelbar und entriegelbar sind, und welcher für die Betätigung nur zugänglich ist, wenn die Anzeige- und Bedieneinheit 14 sich in der in Figur 9a und 9b gezeigten (oberen) Serviceposition befindet.

Der Betätigungsmechanismus weist einen verschwenkbaren Betätigungshebel 27 auf, welcher zwischen einer Verriegelungsposition (Figur 8 und 9a), in welcher er senkrecht steht und in welcher die Vorratsbehälter 13 bzw. 13.1, 13.2 und 13.3 verriegelt sind, und einer Entriegelungsposition, in welcher er horizontal nach vorne vorsteht und in welcher die Vorratsbehälter 13 bzw. 13.1, 13.2 und 13.3 entriegelt sind, verschwenkbar ist. Da nach dem Entriegeln die in der oberen Serviceposition befindliche Anzeige- und Bedieneinheit 14 den Zugang zu den entriegelten (und gleichzeitig an ihrem Ausgang verschlossenen) Vorratsbehälter 13 bzw. 13.1, 13.2 und 13.3 zumindest behindert, der nach vorne in die Horizontale herausgeschwenkte Betätigungshebel 27 aber das Herunterfahren der Anzeige- und Bedieneinheit 14 verhindert, kann der Betätigungshebel 27 in der horizontalen Position gemäss Figur 9b um eine vertikale Achse zum Gehäuse 11 hin herangeschwenkt werden, um den Weg nach unten für die Anzeige- und Bedieneinheit 14 freizugeben. In der in Figur 9b dargestellten Situation kann die Anzeige- und Bedieneinheit 14 dann (bei entriegelten und verschlossenen Vorratsbehältern 13 bzw. 13.1, 13.2 und 13.3) wieder aus der Serviceposition nach untern verfahren werden (Figur 1 und 2), um dann den ungehinderten Zugang zu den Vorratsbehältern 13 bzw. 13.1, 13.2 und 13.3 zu ermöglichen.

Beim Aufsetzen und Verriegeln bzw. Öffnen der Vorratsbehälter 13 bzw. 13.1, 13.2 und 13.3 läuft der Vorgang genau in umgekehrter Reihenfolge.

Gemäss Figur 3a weisen die Vorratsbehälter 13 (bzw. 13.1, 13.2 und 13.3) jeweils auf der Unterseite bzw. im Boden eine Ausgabeöffnung auf, welche mittels eines Schiebers 13b geöffnet und verschlossen werden kann. Der Betätigungshebel 27 öffnet über den zugehörigen Mechanismus mit dem Verriegeln der aufgesetzten Vorratsbehälter 13 bzw. 13.1, 13.2 und 13.3 gleichzeitig den jeweiligen Schieber 13b und schliesst ihn gleichzeitig mit dem Entriegeln, so dass beim Abnehmen der Behälter kein Inhalt unbeabsichtigt austreten kann.

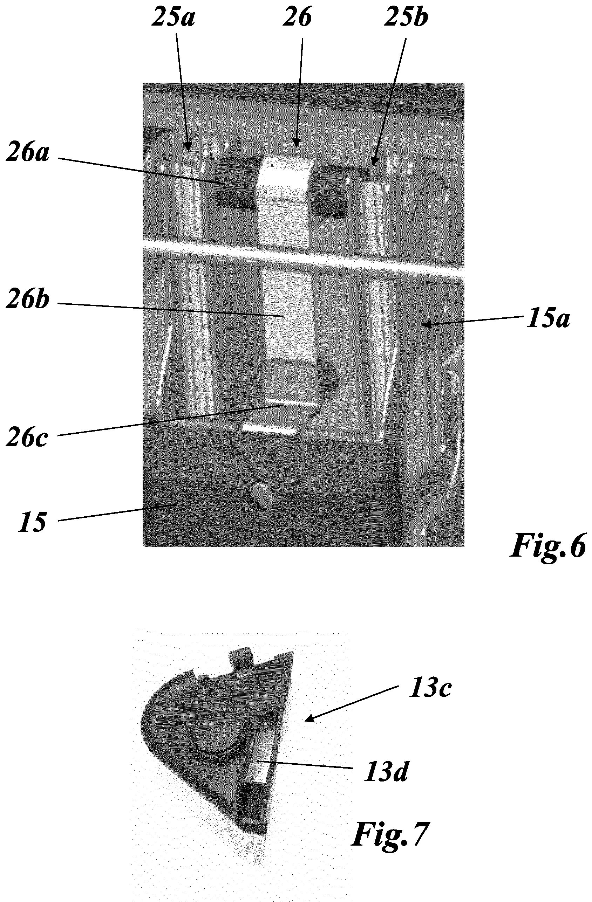

Die Vorratsbehälter 13 bzw. 13.1, 13.2 und 13.3 sind jeweils mit einem per Schlüssel 28 abschliessbaren Deckel 13a ausgestattet (Figur 3a). Wenigstens einer der Vorratsbehälter, im Ausführungsbeispiel der mittlere Vorratsbehälter 13.2, hat im Deckel 13a einen Schlitzeinsatz 13c (Figur 3a, Figur 7) mit einem Einwurfschlitz 13d zum Einwerfen einer Reinigungstablette, mit der die verschmutzenden Teile der Maschine gereinigt werden können.

Damit die Vorratsbehälter 13 bzw. 13.1, 13.2 und 13.3 im abgenommenen und gegebenenfalls gefüllten Zustand sicher abgestellt werden können, sind sie jeweils mit einem in Figur 3b gezeigten ausklappbaren Standbügel 22 ausgestattet, der in einem durch einen schräg ansteigenden Behälterboden 21 gebildeten Hohlraum unter dem Behälter untergebracht ist und aus einem stabilen Draht gebogen ist.

Wie bereits weiter oben erwähnt, ist die Auslasseinheit 15 der Kaffeemaschine 10 mittels einer Verschiebemechanik 15a (Figur 4, Figur 6) in der Höhe verfahrbar ausgebildet. Dabei sind spezielle Mittel in Form einer Federmechanik 26 vorgesehen, welche ein gleichförmiges, insbesondere kraftneutrales, Verfahren der Auslasseinheit 15 in der Höhe bewirken.

Dazu ist gemäss Figur 6 die Auslasseinheit 15 über ein abgewinkeltes Befestigungselement 26c mit dem freien Ende eines auf einem drehbar gelagerten Spulenkörper 26a aufrollbaren Federbandes 26b verbunden. Der Spulenkörper 26a ist quer zwischen zwei vertikalen Schienen 25a und 25b angeordnet, in denen die Auslasseinheit 15 beim Verfahren geführt wird. Das Federband 26b, das z.B. aus einem geeigneten Federstahl hergestellt ist, ist im Ruhezustand spiralförmig aufgerollt und baut eine Rückholkraft auf, wenn es abgerollt wird. Es wird aus dem aufgerollten Ruhezustand abgerollt, wenn die Auslasseinheit 15 nach unten verfahren wird und rollt sich wieder auf, wenn die Auslasseinheit 15 nach oben verfahren wird. Die Rückholkraft des abgerollten Federbandes 26b gleicht zumindest teilweise die Gewichtskräfte aus, die durch das Gewicht der Auslasseinheit 15 auf diese wirken, so dass ein weitgehend gleichförmiges Verfahren der Einheit möglich ist.

Im Inneren der Auslasseinheit 15 ist eine Auslassanordnung 23 (Figur 4 und Figur 5) vorgesehen, in welcher nebeneinander eine Mehrzahl von vertikal ausgerichteten rohrförmigen Auslässen 23a aus einem elastomeren Material, insbesondere Silikonkautschuk oder Gummi, angeordnet sind. Diese Auslässe 23a nehmen am oberen Ende die Enden der (nicht dargestellten) Ausgabeleitungen für die verschiedenen Getränke und Getränkezusätze auf und bilden am unteren Ende die eigentliche Auslassöffnung für die jeweiligen auszugebenden Flüssigkeiten.

Dies hat zur Folge, dass an den unteren Enden der Auslässe 23a mögliche Reste (Tropfen und dgl.) der ausgegebenen Flüssigkeiten hängen bleiben, sich absetzen und mit der Zeit eine stabile Kruste bilden können. Da die Auslässe 23a aus einem elastomeren Material sind, lassen sie sich zum Reinigen leicht verformen, so dass angesetzte Krusten abplatzen und leicht entfernt werden können. Damit die Reinigung einfach vorgenommen werden kann, sind die Auslässe 23a in der Auslasseinheit 15 herausnehmbar gelagert.

Hierbei sind zwei in den Figur 4 und 5 wiedergegebene Varianten möglich, bei denen die Auslässe 23a Teil einer zumindest teilweise aus einem elastomeren Material bestehenden, quer zur Auslassrichtung sich erstreckenden Auslassplatte 15d bzw. 24 sind:
In der einen Variante (Figur 4) besteht die Auslassplatte 15d als eigenständiges Teil vollständig aus dem elastomeren Material und wird in einem unterhalb der Griffplatte 15b angeordneten Auslassgehäuse 15c der Auslasseinheit 15 durch einen von unten aufsetzbaren und einrastbaren (stabilen) Halterahmen 15e gehalten.

In der anderen Variante (Figur 5) ist die Auslassplatte 24 als Verbundteil aus einem elastomeren Dichtungsteil 24a mit den Auslässen 23a und einem damit verbundenen formstabilen Rahmenteil 24b mit Einhängehaken 24c und einem gegenüberliegenden Rasthaken 24d aufgebaut und mittels des Rahmenteils 24b in die Auslasseinheit 15 einrastend einsetzbar. Durch das 2-Komponenten-Verbundteil 24 wird die Bedienung bzw. Reinigung der Maschine weiter vereinfacht.

Schliesslich kann die Bedienbarkeit und Wartung der Kaffeemaschine dadurch weiter vereinfacht und verbessert werden, dass gemäss Figur 2 das Gehäuse 11 abnehmbare Seiten- und/oder Rückwände 20 aufweist, welche am Gehäuse 11 magnetisch gehalten werden. Eine beispielhafte Seitenwand 20 weist dazu an der unteren Kante verteilt nach unten herausstehende Lagerzungen 20a auf, mit denen die Seitenwand in eine entsprechende Nut an dem Gehäuserahmen einsetzbar ist und dann magnetisch einrastend gegen den Gehäuserahmen verschwenkt werden kann.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 10: Kaffeemaschine (Kaffeeautomat)
- 11: Gehäuse
- 12: Fuss
- 13: Vorratsbehälter (z.B. Kaffeebohnenbehälter)
- 13.1-13.3: Vorratsbehälter (z.B. Kaffeebohnenbehälter)
- 13a: Deckel (abschliessbar)
- 13b: Schieber
- 13c: Schlitzeinsatz (f. Reinigungstablette)
- 13d: Einwurfschlitz
- 14: Anzeige- und Bedieneinheit
- 14a: Display
- 14b: Analoganzeige (z.B. Manometer)
- 14c: Heisswasserknopf
- 14d: Dampfknopf
- 15: Auslasseinheit (höhenverschiebbar)
- 15a: Verschiebemechanik
- 15b: Griffplatte
- 15c: Auslassgehäuse
- 15d: Auslassplatte (z.B. aus Gummi, Silikonkautschuk)
- 15e: Halterahmen (einrastbar)
- 16: Heisswasserauslass
- 17: Dampflanze
- 18: Becher
- 19: Kartusche (z.B. Entkalkung; austauschbar)
- 20: Seitenwand (abnehmbar)
- 20a: Lagerzunge
- 21: Behälterboden
- 22: Standbügel (ausklappbar)
- 23: Auslassanordnung
- 23a: Auslass (rohrförmig)
- 24: Auslassplatte (2K)
- 24a: Dichtungseinsatz (z.B. aus Gummi, Silikonkautschuk)
- 24b: Rahmenteil
- 24c: Einhängehaken
- 24d: Rasthaken
- 25a,b: Schiene
- 26: Federmechanik
- 26a: Spulenkörper
- 26b: Federband
- 26c: Befestigungselement
- 27: Betätigungshebel (Kaffeebehälter)
- 28: Schlüssel
- 29: Auffangschale

## Patentansprüche

1. Kaffeemaschine (10) zum automatischen Zubereiten eines Kaffeegetränks und gegebenenfalls weiterer Getränke, umfassend ein Gehäuse (11), in welchem die zur Zubereitung des Kaffeegetränks notwendigen technischen Mittel wie z.B. Mahlwerk, Brüheinrichtung, Boiler, untergebracht sind, eine an der Vorderseite des Gehäuses (11) angeordnete Anzeige- und Bedieneinheit (14), über welche das gewünschte Kaffeegetränk eingegeben werden kann und an welcher Informationen über das jeweilige Kaffeegetränk und/oder den Betriebszustand der Maschine ausgegeben werden, eine unterhalb der Anzeige- und Bedieneinheit (14) angeordnete Auslasseinheit (15), über welche das gewünschte Getränk, gegebenenfalls zusammen mit aromatisierenden oder anderen Zusätzen, ausgegeben wird, sowie auf der Oberseite des Gehäuses (11) angeordnete Vorratsbehälter (13; 13.1, 13.2, 13.3), in welchen Grundstoffe, insbesondere Kaffeebohnen, für die Zubereitung des Kaffeegetränks und gegebenenfalls weiterer Getränke, bereitgehalten werden, **dadurch gekennzeichnet, dass** das Gehäuse (11) abnehmbare Seiten- und/oder Rückwände aufweist, welche am Gehäuse (11) magnetisch gehalten werden.

2. Kaffeemaschine nach Anspruch 1, wobei die Anzeige- und Bedieneinheit (14) zur Ermöglichung eines Zugangs zum Inneren der Maschine zwischen einer Normalposition und einer darüber liegenden Serviceposition in der Höhe verfahrbar ausgebildet ist.

3. Kaffeemaschine nach Anspruch 2, wobei die Vorratsbehälter (13; 13.1, 13.2, 13.3) auf der Oberseite des Gehäuses (11) abnehmbar aufgesetzt sind, wobei die Vorratsbehälter (13; 13.1, 13.2, 13.3) im aufgesetzten Zustand verriegelbar sind, und wobei hinter der Anzeige- und Bedieneinheit (14) ein Betätigungsmechanismus (27) angeordnet ist, mittels welchem die Vorratsbehälter (13; 13.1, 13.2, 13.3) im aufgesetzten Zustand verriegelbar und entriegelbar sind, und welcher für die Betätigung zugänglich ist, wenn die Anzeige- und Bedieneinheit (14) sich in der Serviceposition befindet.

4. Kaffeemaschine nach Anspruch 3, wobei die Vorratsbehälter (13; 13.1, 13.2, 13.3) jeweils eine Ausgabeöffnung aufweisen, welche mittels eines Schiebers (13b) geöffnet und verschlossen werden kann, und wobei der Betätigungsmechanismus (27) mit dem Verriegeln der aufgesetzten Vorratsbehälter (13; 13.1, 13.2, 13.3) gleichzeitig den jeweiligen Schieber (13b) öffnet und mit dem Entriegeln schliesst.

5. Kaffeemaschine nach Anspruch 3, wobei der Betätigungsmechanismus (27) einen verschwenkbaren Betätigungshebel (27) aufweist, welcher zwischen einer Verriegelungsposition, in welcher die Vorratsbehälter (13; 13.1, 13.2, 13.3) verriegelt sind, und einer Entriegelungsposition, in welcher die Vorratsbehälter (13; 13.1, 13.2, 13.3) entriegelt sind, verschwenkbar ist.

6. Kaffeemaschine nach einem der vorangehenden Ansprüche, wobei die Auslasseinheit (15) in der Höhe verfahrbar ausgebildet ist und wobei Mittel (26; 26a-c) vorgesehen sind, welche ein gleichförmiges Verfahren der Auslasseinheit (15) in der Höhe bewirken.

7. Kaffeemaschine nach Anspruch 6, wobei die Auslasseinheit (15) mit dem freien Ende eines aufrollbaren Federbandes (26b) verbunden ist, welches aus einem aufgerollten Ruhezustand abgerollt wird, wenn die Auslasseinheit (15) nach unten verfahren wird und sich wieder aufrollt, wenn die Auslasseinheit (15) nach oben verfahren wird.

8. Kaffeemaschine nach einem der vorangehenden Ansprüche, wobei in der Auslasseinheit (15) eine Auslassanordnung (23) vorgesehen ist, in welcher nebeneinander eine Mehrzahl von rohrförmigen Auslässen (23a) aus einem elastomeren Material, insbesondere Silikonkautschuk oder Gummi, angeordnet sind, in welche Leitungen für die Getränke und/oder Getränkezusätze münden, und welche zum einfachen Reinigen in der Auslasseinheit (15) herausnehmbar gelagert sind.

9. Kaffeemaschine nach Anspruch 8, wobei die Auslässe (23a) Teil einer zumindest teilweise aus einem elastomeren Material bestehenden, quer zur Auslassrichtung sich erstreckenden Auslassplatte (15d; 24) sind.

10. Kaffeemaschine nach Anspruch 9 wobei die Auslassplatte (15d) als eigenständiges Teil vollständig aus dem elastomeren Material besteht und in der Auslasseinheit (15) durch einen von unten aufsetzbaren und einrastbaren Halterahmen (15e) gehalten wird.

11. Kaffeemaschine nach Anspruch 9, wobei die Auslassplatte (24) als Verbundteil aus einem elastomeren Dichtungsteil (24a) und einem damit verbundenen formstabilen Rahmenteil (24b) aufgebaut ist und mittels des Rahmenteils (24b) in die Auslasseinheit (15) einrastend einsetzbar ist.

12. Kaffeemaschine nach einem der vorangehenden Ansprüche, wobei die Anzeige- und Bedieneinheit (14) ein berührungsempfindliches Display (14a) zur Eingabe und Anzeige von Informationen umfasst, und wobei ausserhalb, insbesondere unterhalb des Displays (14a), eine elektronische Analoganzeige (14b) nach Art eines Zeigerinstruments angeordnet ist, welche den Brühdruck anzeigt.

13. Kaffeemaschine nach einem der vorangehenden Ansprüche, wobei links und rechts von der Auslasseinheit (15) ein Heisswasserauslass (16) und eine Dampflanze (17) nach unten herausstehend angeordnet sind, und wobei dem Heisswasserauslass (16) und der Dampflanze (17) auf der Anzeige- und Bedieneinheit (14) jeweils zur Aktivierung ein entsprechender Heisswasserknopf (14c) und Dampfknopf (14d) zugeordnet sind.

14. Kaffeemaschine nach einem der vorangehenden Ansprüche, wobei die Vorratsbehälter (13; 13.1, 13.2, 13.3) jeweils mit einem abschliessbaren Deckel (13a) ausgestattet sind, und wobei wenigstens einer der Vorratsbehälter (13; 13.1, 13.2, 13.3) im Deckel (13a) einen Einwurfschlitz (13d) zum Einwerfen einer Reinigungstablette aufweist.

15. Kaffeemaschine nach einem der vorangehenden Ansprüche, wobei die Vorratsbehälter (13; 13.1, 13.2, 13.3) jeweils einen ausklappbaren Standbügel (22) aufweisen, der einen sicheren Stand des abgenommenen und gegebenenfalls gefüllten Vorratsbehälters (13; 13.1, 13.2, 13.3) ermöglicht.

## Claims

1. A coffee machine (10) for the automatic preparation of a coffee beverage and possibly further beverages, comprising a housing (11), in which the technical means necessary for preparing the coffee beverage, such as for example grinding mechanism, brewing device, boiler, are accommodated, a readout and operator control unit (14) arranged on the front side of the housing (11), by means of which the desired coffee beverage can be input and to which information regarding the respective coffee beverage and/or operating state of the machine is output, an outlet unit (15) arranged below the readout and operator control unit (14) and via which the desired beverage, possibly together with flavouring or other additives, is dispensed, and storage containers (13; 13.1, 13.2, 13.3), which are arranged on the top side of the housing (11) and in which raw materials, in particular coffee beans, for the preparation of the coffee beverage and possibly further beverages, are held ready, **characterised in that** the housing (11) has removable side and/or rear walls, which are held magnetically on the housing (11).

2. The coffee machine according to claim 1, wherein the readout and operator control unit (14) is, in order to allow access to the interior of the machine, designed to be movable in terms of height between a normal position and a service position situated above said normal position.

3. The coffee machine according to claim 2, wherein the storage containers (13; 13.1, 13.2, 13.3) are mounted removably on the top side of the housing (11), wherein the storage containers (13; 13.1, 13.2, 13.3) are lockable in the mounted state, and wherein an actuation mechanism (27) is arranged behind the readout and operator control unit (14), by means of which the storage containers (13; 13.1, 13.2, 13.3) can be locked and unlocked in the mounted state, and which is accessible for the actuation when the readout and operator control unit (14) is situated in the service position.

4. The coffee machine according to claim 3, wherein the storage containers (13; 13.1, 13.2, 13.3) each have a dispensing opening which can be opened and closed by means of a slide (13b), and wherein the actuation mechanism (27) opens the respective slide (13b) simultaneously with the locking of the mounted storage containers (13; 13.1, 13.2, 13.3) and closes the respective slide (13b) with the unlocking.

5. The coffee machine according to claim 3, wherein the actuation mechanism (27) has a pivotable actuation lever (27), which is pivotable between a locking position, in which the storage containers (13; 13.1, 13.2, 13.3) are locked, and an unlocking position, in which the storage containers (13; 13.1, 13.2, 13.3) are unlocked.

6. The coffee machine according to any of the preceding claims, wherein the outlet unit (15) is designed to be movable in terms of height, and wherein means (26; 26a-c) are provided which effect a uniform movement of the outlet unit (15) in terms of height.

7. The coffee machine according to claim 6, wherein the outlet unit (15) is connected to the free end of a spring strip (26b) that can be rolled up, which spring strip is unrolled from a rolled-up rest state when the outlet unit (15) is moved downward and rolls up again when the outlet unit (15) is moved upward.

8. The coffee machine according to any of the preceding claims, wherein an outlet arrangement (23) is provided in the outlet unit (15), in which outlet arrangement a multiplicity of tubular outlets (23a) composed of an elastomer material, in particular silicone rubber or rubber, are arranged adjacent to one another, into which outlets lines for the beverages and/or beverage additives discharge, and which outlets are mounted removably in the outlet unit (15) for the purposes of easy cleaning.

9. The coffee machine according to claim 8, wherein the outlets (23a) are part of an outlet plate (15d; 24) that is at least partially composed of an elastomer material and that extends transversely with respect to the outlet direction.

10. The coffee machine according to claim 9, wherein the outlet plate (15d) is composed, as an independent part, entirely of the elastomer material and is held in the outlet unit (15) by means of a holding frame (15e) that can be mounted and latched in from below.

11. The coffee machine according to claim 9, wherein the outlet plate (24) is constructed as a composite part from an elastomer seal part (24a) and from a dimensionally stable frame part (24b) connected to said seal part, and by way of the frame part (24b) is insertable with latching-in action into the outlet unit (15).

12. The coffee machine according to any of the preceding claims, wherein the readout and operator control unit (14) comprises a touch-sensitive display (14a) for the input and display of information, and wherein an electronic analog readout (14b) in the manner of a pointer instrument, which indicates the brewing pressure, is arranged outside, in particular below, the display (14a).

13. The coffee machine according to any of the preceding claims, wherein, to the left and right of the outlet unit (15), a hot-water outlet (16) and a steam lance (17) are arranged that project out downward, and wherein on the readout and operator control unit (14), a hot-water button (14c) and a steam button (14d) are assigned for activation purposes to each of the hot-water outlet (16) and the steam lance (17) .

14. The coffee machine according to any of the preceding claims, wherein the storage containers (13; 13.1, 13.2, 13.3) are each equipped with a lockable cover (13a), and wherein at least one of the storage containers (13; 13.1, 13.2, 13.3) has an insertion slot (13d) in the cover (13a), for the insertion of a cleaning tablet.

15. The coffee machine according to any of the preceding claims, wherein the storage containers (13; 13.1, 13.2, 13.3) each have a stand (22) that can be folded out, and which enables a stable standing position for the removed and possibly filled storage container (13; 13.1, 13.2, 13.3).

## Revendications

1. Machine à café (10) permettant la préparation automatique d'une boisson au café et éventuellement d'autres boissons, comprenant un boîtier (11) dans lequel sont logés les moyens techniques nécessaires à la préparation de la boisson au café, tels que par exemple un broyeur, un dispositif d'infusion, une chaudière, et comprenant une unité d'affichage et de commande (14) disposée sur la face avant du boîtier (11), par l'intermédiaire de laquelle la boisson au café souhaitée peut être entrée et sur laquelle des informations concernant la boisson au café respective et/ou l'état de fonctionnement de la machine sont délivrées, une unité de sortie (15) disposée en dessous de l'unité d'affichage et de commande (14), par l'intermédiaire de laquelle la boisson souhaitée est distribuée, éventuellement avec des additifs aromatisants ou autres, ainsi que des réservoirs de stockage (13 ; 13.1, 13.2, 13.3) disposés sur la face supérieure du boîtier (11), dans lesquels des produits de base, en particulier des grains de café, sont conservés pour la préparation de la boisson au café et éventuellement d'autres boissons, **caractérisé en ce que** le boîtier (11) présente des parois latérales et/ou arrières détachables qui sont maintenues magnétiquement sur le boîtier (11).

2. Machine à café selon la revendication 1, dans laquelle l'unité d'affichage et de commande (14) est conçue de manière à pouvoir être déplacée en hauteur entre une position normale et une position de service au-dessus de celle-ci pour permettre un accès à l'intérieur de la machine.

3. Machine à café selon la revendication 2, dans laquelle les réservoirs de stockage (13 ; 13.1, 13.2, 13.3) sont montés de manière détachable sur la face supérieure du boîtier (11), dans laquelle les réservoirs de stockage (13 ; 13.1, 13.2, 13.3) peuvent être verrouillés à l'état monté, et dans laquelle un mécanisme d'actionnement (27) est disposé derrière l'unité d'affichage et de commande (14), au moyen duquel les réservoirs de stockage (13 ; 13.1, 13.2, 13.3) peuvent être verrouillés et déverrouillés à l'état monté et lequel est accessible pour l'actionnement lorsque l'unité d'affichage et de commande (14) se trouve dans la position de service.

4. Machine à café selon la revendication 3, dans laquelle les réservoirs de stockage (13 ; 13.1, 13.2, 13.3) présentent respectivement une ouverture de distribution qui peut être ouverte et fermée au moyen d'un coulisseau (13b), et dans laquelle le mécanisme d'actionnement (27) ouvre simultanément le coulisseau (13b) respectif avec le verrouillage des réservoirs de stockage (13 ; 13.1, 13.2, 13.3) montés et le ferme avec le déverrouillage.

5. Machine à café selon la revendication 3, dans laquelle le mécanisme d'actionnement (27) présente un levier d'actionnement (27) pivotant pouvant pivoter entre une position de verrouillage, dans laquelle les réservoirs de stockage (13 ; 13.1, 13.2, 13.3) sont verrouillés, et une position de déverrouillage, dans laquelle les réservoirs de stockage (13 ; 13.1, 13.2, 13.3) sont déverrouillés.

6. Machine à café selon l'une des revendications précédentes, dans laquelle l'unité de sortie (15) est conçue de manière à pouvoir être déplacée en hauteur, et dans laquelle des moyens (26 ; 26a-c) sont prévus, lesquels provoquent un déplacement uniforme de l'unité de sortie (15) en hauteur.

7. Machine à café selon la revendication 6, dans laquelle l'unité de sortie (15) est reliée à l'extrémité libre d'une bande de ressort enroulable (26b), laquelle est déroulée à partir d'un état de repos enroulé lorsque l'unité de sortie (15) est déplacée vers le bas et s'enroule de nouveau lorsque l'unité de sortie (15) est déplacée vers le haut.

8. Machine à café selon l'une des revendications précédentes, dans laquelle un agencement de sortie (23) est prévu dans l'unité de sortie (15), dans lequel une pluralité de sorties (23a) tubulaires en un matériau élastomère, en particulier en caoutchouc silicone ou en caoutchouc, sont disposées les unes à côté des autres, dans lesquelles débouchent des conduites pour les boissons et/ou les additifs pour boissons et lesquelles sont montées de manière détachable dans l'unité de sortie (15) pour un nettoyage facile.

9. Machine à café selon la revendication 8, dans laquelle les sorties (23a) font partie d'une plaque de sortie (15d ; 24) s'étendant transversalement à la direction de sortie et constituée au moins partiellement d'un matériau élastomère.

10. Machine à café selon la revendication 9, dans laquelle la plaque de sortie (15d) est entièrement constituée du matériau élastomère en tant que partie autonome et est maintenue dans l'unité de sortie (15) par un cadre de maintien (15e) pouvant être monté et encliqueté par le bas.

11. Machine à café selon la revendication 9, dans laquelle la plaque de sortie (24) est composée, en tant que partie composite, d'une partie d'étanchéité élastomère (24a) et d'une partie de cadre (24b) indéformable reliée à celle-ci et peut être insérée par encliquetage dans l'unité de sortie (15) au moyen de la partie de cadre (24b).

12. Machine à café selon l'une des revendications précédentes, dans laquelle l'unité d'affichage et de commande (14) comprend un écran (14a) tactile permettant l'entrée et l'affichage d'informations, et dans laquelle en dehors, en particulier en dessous de l'écran (14a), un affichage analogique électronique (14b) est disposé à la manière d'un instrument à aiguille qui affiche la pression d'infusion.

13. Machine à café selon l'une des revendications précédentes, dans laquelle une sortie d'eau chaude (16) et une lance à vapeur (17) sont disposées de manière saillante vers le bas, à gauche et à droite de l'unité de sortie (15), et dans laquelle un bouton d'eau chaude (14c) et un bouton de vapeur (14d) correspondants sont respectivement associés, pour l'activation, à la sortie d'eau chaude (16) et à la lance à vapeur (17) sur l'unité d'affichage et de commande (14).

14. Machine à café selon l'une des revendications précédentes, dans laquelle les réservoirs de stockage (13 ; 13.1, 13.2, 13.3) sont respectivement équipés d'un couvercle (13a) pouvant être verrouillé, et dans laquelle au moins l'un des réservoirs de stockage (13 ; 13.1, 13.2, 13.3) présente une fente d'insertion (13d) dans le couvercle (13a), laquelle permettant d'insérer une tablette de nettoyage.

15. Machine à café selon l'une des revendications précédentes, dans laquelle les réservoirs de stockage (13 ; 13.1, 13.2, 13.3) présentent respectivement un étrier de support pouvant être déplié (22) qui permet un support stable du réservoir de stockage (13 ; 13.1, 13.2, 13.3) détaché et éventuellement rempli.
